# EUROPEAN PATENT APPLICATION

(11) **EP 3 991 857 A1**
(43) Date of publication of application: **04.05.2022**
(21) Application number: 20831450.0
(22) Date of filing: 23.06.2020
(51) Int. Cl.: B05D 5/00, B05D 7/24, B32B 9/00, B32B 27/00, C09D 5/10, C09D 183/02, B32B 15/01, C09D 7/61

(54) **PRIMARY ANTICORROSION COATING COMPOSITION, SUBSTRATE WITH PRIMARY ANTICORROSION COATING MEMBRANE, AND MANUFACTURING METHOD THEREFOR**

(30) Priority: 27.06.2019 JP 2019120164
(71) Applicant: Chugoku Marine Paints, Ltd., Hiroshima 739-0652 (JP)
(72) Inventor: OKADA Masamitsu, Otake-shi, Hiroshima 739-0652 (JP)
(74) Representative: Hoffmann Eitle
(86) International application number: PCT/JP2020/024571
(87) International publication number: WO 2020/262366

(57) **Abstract**

To provide a primary anticorrosion coating composition capable of forming a coating film having a more excellent anticorrosion as compared with conventional inorganic zinc primary anticorrosion coatings. A primary anticorrosion coating composition containing: a siloxane binder (a) which is a condensate of at least one compound selected from alkyl silicates and alkyl trialkoxysilanes; zinc powder (b); and a carbon nanomaterial (c) which is at least one selected from graphenes, fullerenes, and carbon nanotubes.

## Description

### [Technical Field]

The present invention relates to a primary anticorrosion coating composition (shop primer), a substrate with primary anticorrosion coating film, and a manufacturing method therefor.

### [Background Art]

Conventionally, primary anticorrosion coatings are applied onto the surfaces of steel plates, in order to prevent rusting during construction of large iron and steel structures such as ships, offshore structures, plants, bridges, and land tanks. As such primary anticorrosion coatings, organic primary anticorrosion coatings such as wash primers, non-zinc epoxy primers, and epoxy zinc rich primers, and inorganic zinc primary anticorrosion coatings each containing a siloxane binder and zinc powder are known (for example, see Patent Literatures 1 to 4). Among these primary anticorrosion coatings, inorganic zinc primary anticorrosion coatings having excellent weldability are most widely used.

### [Citation List]

### [Patent Literature]

[Patent Literature 1] JP-A 08-073777
[Patent Literature 2] JP-A 2005-068278
[Patent Literature 3] JP-A 2015-533870
[Patent Literature 4] WO 2014/014063

### [Summary of Invention]

### [Technical Problem]

Conventional inorganic zinc primary anticorrosion coatings contain a large amount of zinc powder in order to protect the surfaces of steel plates. Further improvement in the anticorrosion of inorganic zinc primary anticorrosion coatings is advantageous, for example, in that the amount of zinc powder can be reduced, as a result of which the cost of zinc can be reduced.

It is an object of the present invention to provide a primary anticorrosion coating composition capable of forming a coating film having a more excellent anticorrosion as compared with conventional inorganic zinc primary anticorrosion coatings.

### [Solution to Problem]

In order to achieve the object, the inventors have made diligent studies. As a result, they have found that the object can be achieved by a primary anticorrosion coating composition having the following composition, thereby accomplishing the present invention.

The present invention, for example, relates to [1] to [6] below.
[1] A primary anticorrosion coating composition comprising: a siloxane binder (a) which is a condensate of at least one compound selected from alkyl silicates and alkyl trialkoxysilanes; zinc powder (b); and a carbon nanomaterial (c) which is at least one selected from graphenes, fullerenes, and carbon nanotubes.
[2] The primary anticorrosion coating composition according to [1] above, wherein the zinc powder (b) is at least one selected from flaky zinc powder and spherical zinc powder.
[3] The primary anticorrosion coating composition according to [1] or [2] above, wherein a content of the carbon nanomaterial (c) is 0.0001 to 0.7 parts by mass with respect to 100 parts by mass of the zinc powder (b).
[4] The primary anticorrosion coating composition according to any one of [1] to [3] above, wherein the carbon nanomaterial (c) comprises a graphene.
[5] A substrate with primary anticorrosion coating film, comprising: a substrate; and a primary anticorrosion coating film formed of the primary anticorrosion coating composition according to any one of [1] to [4] above and formed on a surface of the substrate.
[6] A method for manufacturing a substrate with primary anticorrosion coating film, comprising: a step of applying the primary anticorrosion coating composition according to any one of [1] to [4] above onto a surface of the substrate; and a step of curing the primary anticorrosion coating composition applied to form a primary anticorrosion coating film.

### [Advantageous Effects of Invention]

The present invention can provide a primary anticorrosion coating composition capable of forming a coating film having a more excellent anticorrosion as compared with conventional inorganic zinc primary anticorrosion coatings. It is considered that further improvement in anticorrosion is advantageous, for example, in that the amount of zinc powder can be reduced, as a result of which the cost of zinc can be reduced.

### [Description of Embodiments]

Hereinafter, the present invention will be described in detail, including preferable embodiments.

### [Primary anticorrosion coating composition]

The primary anticorrosion coating composition of the present invention (which may be hereinafter also referred to as "the composition of the present invention") includes a siloxane binder (a) which is a condensate of at least one compound selected from alkyl silicates and alkyl trialkoxysilanes, zinc powder (b), and a carbon nanomaterial (c) which is at least one selected from graphenes, fullerenes, and carbon nanotubes.

### <Siloxane binder (a)>

The siloxane binder (a) is a condensate of at least one compound selected from alkyl silicates and alkyl trialkoxysilanes and is preferably a partially hydrolyzed condensate of the compound.

Examples of the alkyl silicates include tetraalkyl orthosilicates such as tetramethyl orthosilicate, tetraethyl orthosilicate, tetra-n-propyl orthosilicate, tetra-i-propyl orthosilicate, tetra-n-butyl orthosilicate, and tetra-sec-butyl orthosilicate; and polysilicates such as methyl polysilicate and ethyl polysilicate.

Examples of the alkyl trialkoxysilanes include methyltrimethoxysilane, ethyltrimethoxysilane, methyltriethoxysilane, and ethyltriethoxysilane.

The alkoxy groups contained in the alkyl silicates and the alkyl trialkoxysilanes generally have 1 to 4, preferably 1 to 2 carbon atoms. The alkyl groups contained in the alkyl trialkoxysilanes generally have 1 to 4, preferably 1 to 2 carbon atoms.

The siloxane binder (a) is preferably a condensate of an alkyl silicate, more preferably a condensate of tetraethyl orthosilicate, particularly preferably a partially hydrolyzed condensate of Ethyl silicate 40 (product name, available from COLCOAT CO., LTD.) which is an initial condensate of tetraethyl orthosilicate.

The weight-average molecular weight (Mw) of the siloxane binder (a) is generally 1,000 to 6,000, preferably 1,200 to 5,000, more preferably 1,300 to 4,000. The Mw is a value measured by gel permeation chromatography (GPC) in terms of standard polystyrene.

The conditions for GPC measurement are as follows. A small amount of a condensate sample is taken, and tetrahydrofuran is added thereto for dilution. The solution is filtered with a membrane filter, to obtain a GPC measurement sample.
- Apparatus: 2695 separation module (Aliance GPC multi system), available from Nihon Waters K.K.
- Columns: TSKgel Super H4000 and TSKgel Super H2000, available from Tosoh Corporation
- Eluent: Tetrahydrofuran (THF)
- Flow rate: 0.6 ml/min
- Detector: Shodex RI-104
- Temperature of column constant-temperature bath: 40°C
- Standard substance: Polystyrene

When the Mw falls within such a range, the coating when dried can be cured at normal temperature (e.g., 5 to 40°C) in a short time, the anticorrosion of the coating film and the adhesive strength to the substrate and the topcoat film are improved, and blowholes (inner bubbles) during the welding process tend to be reduced. For example, when the Mw is equal to or higher than the lower limit value, the curing reaction of the siloxane binder (a) is fast, and the coating film when dried does not need to be cured by heating at high temperature (e.g., 200 to 400°C), even if short curing time is required. Further, when the Mw is equal to or lower than the upper limit value, the coating film tends to have excellent anticorrosion.

The siloxane binder (a) can be manufactured by a conventionally known method. For example, the siloxane binder (a) can be prepared by adding hydrochloric acid or the like to a mixed solution of at least one compound selected from alkyl silicates and alkyl trialkoxysilanes or an initial condensate thereof and an organic solvent, and stirring the mixture, to generate a partially hydrolyzed condensate.

One or more types of the siloxane binder (a) can be used.

In the composition of the present invention, the amount of the siloxane binder (a) in terms of SiO₂ is generally 2 to 40 mass%, preferably 3 to 30 mass%, more preferably 5 to 15 mass%, in the total amount of coating compositions. Such an embodiment is preferable in view of the film-forming property of the composition and the anticorrosion of a coating film to be formed.

In the case where the composition of the present invention is a two-component composition described later, it is preferable to adjust the content percentage of the siloxane binder (a) in the coating obtained by mixing a main agent component and a pigment paste component to such a range.

### <Binder other than siloxane binder (a)>

The composition of the present invention may contain a binder other than the siloxane binder (a), as long as the objects and effects of the present invention are not impaired. Examples of the other binder include polyvinyl butyral resins. Examples of commercially available products of the polyvinyl butyral resins include S-LEC B BM-2 (product name, available from SEKISUI CHEMICAL CO., LTD).

### <Zinc powder (b)>

"Zinc powder" means powder of metallic zinc or powder of an alloy mainly containing zinc (e.g., an alloy of zinc and at least one selected from aluminum, magnesium, and tin, specifically, zinc-aluminum alloy or zinc-tin alloy).

Examples of the zinc powder (b) include flaky zinc powder and spherical zinc powder.

The flaky zinc powder preferably has a median diameter (D50) of 30 µm or less and an average thickness of 1 µm or less, more preferably a median diameter (D50) of 5 to 20 µm and an average thickness of 0.2 to 0.9 µm. Further, an aspect ratio (median diameter/average thickness) represented by a ratio of the median diameter (D50) to the average thickness is preferably 10 to 150, more preferably 20 to 100.

The median diameter can be measured using a laser diffraction/scattering particle size distribution analyzer, e.g., "SALD 2200" (product name, available from SHIMADZU CORPORATION). The average thickness can be calculated by observing flaky zinc powder using a scanning electron microscope (SEM), e.g., "XL-30" (product name, available from Koninklijke Philips N.V.), measuring the thickness of several tens to several hundreds powder particles, and determining an average.

Examples of commercially available products of the flaky zinc powder include STANDART Zinc Flake GTT, STANDART Zinc Flake G, and STANDART Zinc Flake AT (product names, available from ECKART GmbH), STAPA 4 ZNAL7 (product name: an alloy of zinc and aluminum, available from ECKART GmbH), and STAPA 4 ZNSN30 (product name: an alloy of zinc and tin, available from ECKART GmbH).

The term "spherical" in the spherical zinc powder means that the shape is spherical. There is no particularly specified range, but the aspect ratio is preferably 1 to 3. Spherical zinc powder is cheaper than flaky zinc powder, and its use can reduce the cost of the coating composition. The aspect ratio can be measured in the same manner as the flaky zinc powder.

The spherical zinc powder preferably has a median diameter (D50) of 2 to 15 µm, more preferably 2 to 7 µm. The median diameter can be measured using a laser diffraction/scattering particle size distribution analyzer, e.g., "SALD 2200" (product name, available from SHIMADZU CORPORATION).

Examples of commercially available products of the spherical zinc powder include F-2000 (product name, available from THE HONJO CHEMICAL CORPORATION).

It is preferable to use flaky zinc powder and spherical zinc powder in combination as the zinc powder (b) since good anticorrosion is obtained in the combined system of the zinc powder (b) and the carbon nanomaterial (c). The content percentage of flaky zinc powder in the zinc powder (b) is preferably 3 to 45 mass%, more preferably 6 to 35 mass%, further preferably 10 to 25 mass%. Such an embodiment is preferable in that a coating film with better anticorrosion, better overcoatability, and better welding/cutting properties can be formed.

One or more types of the zinc powder (b) can be used.

In the composition of the present invention, the content percentage of the zinc powder (b) is preferably 10 to 90 mass%, more preferably 15 to 85 mass%, further preferably 25 to 75 mass%, in the solid content of the coating composition. The solid content refers to the total components summing the amount of the siloxane binder (a) in terms of SiO₂ and the amounts of components other than the siloxane binder (a) excluding the solvent. Such an embodiment is preferable in view of anticorrosion and weldability. In the case where the composition of the present invention is a two-component composition described later, it is preferable to adjust the content percentage of the zinc powder (b) in the solid content of the coating obtained by mixing a main agent component and a pigment paste component to such a range.

In conventional coating compositions, a small amount of the zinc powder (b) may prevent the sacrificial anticorrosion effect from being exerted well to cause insufficient anticorrosion. Meanwhile, use of the carbon nanomaterial (c) together with the zinc powder (b) allow good anticorrosion to be obtained in the present invention. Further, as the amount of the zinc powder (b) is reduced, the cost of zinc can be reduced, and even if the amount of other pigment components is increased, the viscosity of a coating composition to be obtained can be appropriately maintained. For example, in the case where the amount of potassium feldspar is increased by the amount of the zinc powder (b) reduced, improvement in weldability can be expected. Further, the reduction of the amount of the zinc powder (b) can reduce zinc vapor during welding, thereby reducing welding defects such as blowholes. To sum up, the composition of the present invention can form a coating film having excellent anticorrosion, excellent overcoatability, and excellent welding/cutting properties in a steel plate-welding/cutting step even with a small amount of the zinc powder (b), as compared with conventional inorganic zinc primary anticorrosion coating compositions.

For obtaining such an effect, the content percentage of the zinc powder (b) is preferably 55 mass% or less, more preferably 10 to 55 mass%, further preferably 15 to 55 mass%, even more preferably 25 to 55 mass%, particularly preferably 30 to 55 mass%, in the solid content of the coating composition.

### <Carbon nanomaterial (c)>

The carbon nanomaterial (c) is at least one selected from graphenes, fullerenes, and carbon nanotubes. In the case of a "graphene", the carbon nanomaterial in the present invention has a sheet thickness of nano size and may have a particle size over nano size. Likewise, in the case of a "carbon nanotube", it has a diameter of nano size and may have a fiber length over nano size.

A "graphene" is a monoatomic sheet (graphene sheet) in which a plurality of carbon atoms are bonded and aligned in a planar and hexagonal lattice pattern. A stack of many graphene sheets is called graphite. The graphene in the present invention includes not only a graphene sheet formed of only one layer with carbon atoms aligned in a plane, but also a substance commercially named graphene, in which such sheets are stacked in several to about 100 layers. Although there are various particle sizes of graphenes, it is preferable to use a graphene with a median diameter (D50) of 1 to 10 µm for the composition of the present invention. The median diameter can be measured using a laser diffraction/scattering particle size distribution analyzer, e.g., "SALD 2200" (product name, available from SHIMADZU CORPORATION).

A "fullerene" is a closed-shell hollow molecule consisting of a plurality of carbon atoms, e.g., a closed-shell hollow molecule consisting of five-membered rings and six-membered rings formed by covalent bonds between a plurality of carbon atoms. The diameter is generally 0.5 to 2 nm. Examples of the fullerene include C₆₀ fullerene and C₇₀ fullerene.

A "carbon nanotube" is a carbon material having a shape in which a graphene sheet is wound in a tubular shape. Examples thereof include single-walled carbon nanotubes in which a graphene sheet is wound in a single-walled tubular shape, and multi-walled carbon nanotubes in which graphene sheets are wound in a multi-walled coaxial tubular shape. Carbon nanotubes have a diameter in the nanometer region, for example, of 0.4 to 50 nm. For the composition of the present invention, it is preferable to use a carbon nanotube with an average diameter of 1 to 30 nm and an average fiber length of 10 µm or less.

Examples of commercially available products of the graphenes include Genable 1031 and Genable 1231 (product names, available from Applied Graphene Materials plc), and Graphene Dispersion in NMP (product name, available from ACS Material). Examples of commercially available products of the fullerenes include Fullerene C60 (product name, available from Tokyo Chemical Industry Co., Ltd.), and C60 fullerene and C70 fullerene (product names, available from THE HONJO CHEMICAL CORPORATION). Examples of commercially available products of the carbon nanotubes include Single-walled nanotube, Double-walled nanotube, and Multi-walled nanotube (product names, available from THE HONJO CHEMICAL CORPORATION), and Carbon Nanotube Single-walled, Carbon Nanotube Multi-walled, and Carbon Nanotube Aligned Multi-walled (product names, available from Tokyo Chemical Industry Co., Ltd).

Although the reason why the anticorrosion is further improved by the carbon nanomaterial (c) is not clear, it is considered that a graphene is a sheet-like substance (graphene sheet) with a sheet thickness of nano order, the graphene sheet is oriented almost parallel to the surface of the coating film in the coating film, and multiple layers of such graphene sheets are present in the thickness direction of the coating film, for example. Therefore, it is considered that a shielding effect against moisture or the like by the graphene sheets is exerted to improve the anticorrosion.

Further, it is considered that the sacrificial anticorrosion effect of zinc is more effectively exerted due to high conductivity of fullerenes and carbon nanotubes. This means that the electrons released from zinc can reach the surface of a base material such as a steel plate more effectively, and the steel plate is protected from corrosion. Since fullerenes and carbon nanotubes are of nano-order sizes, they are uniformly dispersed in the coating film by addition in a small amount, so that the effect in conductivity can be obtained. Therefore, the anticorrosion is considered to be improved.

In the composition of the present invention, the content of the carbon nanomaterial (c) is preferably 0.0001 to 0.7 parts by mass, more preferably 0.002 to 0.5 parts by mass, with respect to 100 parts by mass of the zinc powder (b). The content falling within such a range is preferable in view of anticorrosion. Further, since excellent anticorrosion can be obtained with a slight amount of the carbon nanomaterial (c) as described above, it is also advantageous in view of cost. The content exceeding such a range excessively increases the electric anticorrosion action and increases the zinc consumption, which may cause insufficient anticorrosion. The content falling below such a range causes insufficient electric anticorrosion action of the coating film, which also may cause insufficient anticorrosion.

In the composition of the present invention, the content percentage of the carbon nanomaterial (c) is preferably 0.0001 to 0.3 mass%, more preferably 0.0007 to 0.25 mass%, in the solid content of the coating composition.

### <Pigment components>

The composition of the present invention may contain pigment components such as anticorrosion pigments other than the zinc powder (b), conductive materials other than the zinc powder (b) and the carbon nanomaterial (c), inorganic powder other than the components (b) and (c), glass powder, molybdenum, and molybdenum compounds.

### <<Anticorrosion pigments other than zinc powder (b)>>

The composition of the present invention may contain anticorrosion pigments other than the zinc powder (b) in order to supplementally ensure the anticorrosion of the coating film. Examples of the anticorrosion pigments include zinc phosphate compounds, calcium phosphate compounds, aluminum phosphate compounds, aluminum zinc phosphomolybdate compounds, magnesium phosphate compounds, zinc phosphite compounds, calcium phosphite compounds, aluminum phosphite compounds, strontium phosphite compounds, aluminum tripolyphosphate compounds, zinc cyanamide compounds, borate compounds, nitro compounds, and composite oxides.

Examples of commercially available products of the anticorrosion pigments include an (aluminum) zinc phosphate compound: LF BOSEI CP-Z (product name, available from KIKUCHI COLOR & CHEMICALS CORPORATION), an aluminum zinc phosphomolybdate compound: LF BOSEI PM-303W (product name, available from KIKUCHI COLOR & CHEMICALS CORPORATION)), a (calcium) zinc phosphite compound: PROTEX YM-70 (product name, available from TAIHEI CHEMICAL INDUSTRIAL CO., LTD.), a (strontium) zinc phosphite compound: PROTEX YM-92NS (product name, available from TAIHEI CHEMICAL INDUSTRIAL CO., LTD.), an aluminum tripolyphosphate compound: K white #84 (product name, available from TAYCA CORPORATION), and a zinc cyanamide compound: LF BOSEI ZK-32 (product name, available from KIKUCHI COLOR & CHEMICALS CORPORATION).

One or more of the anticorrosion pigments can be used.

### <<Conductive materials other than zinc powder (b) and carbon nanomaterial (c)>>

The composition of the present invention may contain conductive materials other than the zinc powder (b) and the carbon nanomaterial (c) in order to complement the electric anticorrosion action of the carbon nanomaterial (c). Examples of the conductive materials include zinc oxide, metal powder other than the zinc powder (b), and carbon powder other than the carbon nanomaterial (c).

Examples of commercially available products of the zinc oxide include zinc oxide Type 1 (available from Sakai Chemical Industry Co., Ltd.) and zinc oxide Type 3 (available from HAKUSUI TECH CO., LTD. or Sakai Chemical Industry Co., Ltd.).

Examples of the metal powder include Fe-Si powder, Fe-Mn powder, Fe-Cr powder, magnetic iron powder, and iron phosphide. Examples of commercially available products of the metal powder include Ferrosilicon (product name, available from KINSEI MATEC CO., LTD.), Ferromanganese (product name, available from KINSEI MATEC CO., LTD.), Ferrochrome (product name, available from KINSEI MATEC CO., LTD.), Sand iron powder (product name, available from KINSEI MATEC CO., LTD.), and Ferrophos 2132 (product name, available from Occidental Chemical Corporation).

Examples of the carbon powder include carbon blacks used as coloring pigments, and examples of commercially available products of the carbon blacks include MITSUBISHI Carbon Black MA-100 (product name, available from Mitsubishi Chemical Corporation). Examples of the carbon powder also include graphites, and examples of commercially available products of the graphites include Earthy graphite (product name, available from Nishimura Graphite Co., Ltd).

One or more of the conductive materials can be used.

In the composition of the present invention, the content of the conductive materials other than the components (b) and (c) is preferably 0 to 60 parts by mass, more preferably 2 to 50 parts by mass, with respect to 100 parts by mass of the zinc powder (b). Such an embodiment is preferable in that the electric anticorrosion effect of the coating film is enhanced, and the anticorrosion is improved.

### <<Inorganic powder other than zinc powder (b) and carbon nanomaterial (c)>>

The composition of the present invention may further contain inorganic powder other than the zinc powder (b) and the carbon nanomaterial (c). Examples of the inorganic powder include powdered zinc compounds (however, excluding zinc oxides, zinc phosphate compounds, zinc phosphite compounds, and zinc cyanamide compounds), mineral powder, alkali glass powder, and powdered inorganic compounds which generate pyrolysis gas.

A powdered zinc compound is considered to have an action of adjusting the activity of the oxidation reaction such as the degree of ionization (generation of Zn²⁺) of the zinc powder (b). When the composition of the present invention contains a powdered zinc compound, a further suitable anticorrosion can be imparted to the composition. Examples of the powdered zinc compound include powders of zinc chloride, sulfide zinc, zinc sulfate, and the like. Examples of commercially available products of the powdered zinc compound include "Sachtolich HD (product name: Sulfide zinc, available from Sachleben Chemie GmbH)" and "Zinc chloride (available from NAGAI CHEMICAL IND. CO., LTD.)".

Examples of the mineral powder include titanium mineral powder, silica powder, soda feldspar, potassium feldspar, zirconium silicate, wollastonite, and diatomite. Examples of commercially available products of the mineral powder include Rutile flower S (available from KINSEI MATEC CO., LTD.), Ilmenite powder (available from KINSEI MATEC CO., LTD.), A-PAX (available from KINSEI MATEC CO., LTD.), Ceramic powder OF-T (potassium feldspar, available from KINSEI MATEC CO., LTD.), Aplite (available from KINSEI MATEC CO., LTD.), Silica MC-O (available from Maruo Calcium Co., Ltd.), Baryte BA (available from Sakai Chemical Industry Co., Ltd.), Radiolite (available from Showa Chemical Industry Co., LTD.), and Celite 545 (available from Johns-Manville Corporation).

The alkali glass powder has an action of activating zinc by alkali metal ions contained in the glass powder, and of stabilizing arc during welding of the steel plate. Examples of the alkali glass powder include those obtained by crushing sheet glass and bottle glass which are generally widespread to about 5 µm to prepare glass powder and adjusting the pH of the glass powder to 8 or less by acid washing. Examples of commercially available products of the alkali glass powder include APS-325 (product name, available from Puremic Inc.).

The powdered inorganic compound which generates pyrolysis gas is a powdered inorganic compound which generates gas (e.g., CO₂ or F₂) by pyrolysis (e.g., pyrolysis at 500 to 1,500°C). The powdered inorganic compound has an action, when welding a steel plate having a coating film formed from a coating composition containing the powder, of removing gas bubbles due to gas generated in a molten pool during welding from organic components contained in the binder or the like, together with gas derived from the powdered inorganic compound from the molten pool.

Examples of the powdered inorganic compound which generates pyrolysis gas include calcium fluoride, calcium carbonate, magnesium carbonate, and strontium carbonate. Examples of commercially available products of the powdered inorganic compound include Fluorite 400 mesh (product name, available from KINSEI MATEC CO., LTD.), Super SS (product name, available from Maruo Calcium Co., Ltd.), Magnesium carbonate (product name, available from Tomita Pharmaceutical Co., Ltd.), and Strontium carbonate A (product name, available from THE HONJO CHEMICAL CORPORATION).

For example, in the case where the amount of the zinc powder (b) is reduced in the present invention, the content of the pigment components can be increased. The content of potassium feldspar may be increased, for example, in order to improve the weldability. In one embodiment, the content percentage of the potassium feldspar is preferably 5 to 45 mass%, more preferably 10 to 43 mass%, in the solid content of the coating composition. Further, in the case where the amount of the zinc powder (b) is reduced in the present invention (e.g., in the case where the amount of the zinc powder (b) is 55 mass% or less in the solid content of the coating composition), the content percentage of the potassium feldspar is preferably 30 to 40 mass% in the solid content of the coating composition.

### «Glass powder other than alkali glass»

The composition of the present invention may contain glass powder having a softening point of 400 to 800°C and a total content of Li₂O, Na₂O, and K₂O of 12 mass% or less. The glass powder acts as a zinc oxidation inhibitor when the coating film is heated at high temperature, e.g., 400 to 900°C.

The glass powder is obtained, for example, by heat-melting compounds constituting glass at about 1,000 to 1,100°C for a predetermined time, cooling it, and then sizing it into powder by a pulverizer. Examples of components constituting the glass include SiO₂, B₂O₃, Al₂O₃, ZnO, BaO, MgO, CaO, SrO, Bo₂O₃, Li₂O, Na₂O, K₂O, PbO, P₂O₅, In₂O₃, SnO, CuO, Ag₂O, V₂O₅, and TeO₂. PbO also can be used as a constituent compound of the glass, but it is desirably not used, since it may have an adverse effect on the environment. The glass powder contains the above compounds at a desired ratio in order to develop various glass properties such as softening point, thermal expansion coefficient, dielectric constant, transparency, and hue.

### «Molybdenum and molybdenum compound»

The composition of the present invention may contain one or both of molybdenum (metal molybdenum) and a molybdenum compound. These act as zinc oxidation inhibitors (so-called white rust inhibitors).

When a substrate coated with the composition of the present invention is exposed outdoors, powdery white rust (mixture of zinc oxide, zinc hydroxide, zinc carbonate, and the like) may be formed on the surface of the coating film due to zinc or a zinc alloy in the coating film reacting with water, oxygen, or carbon dioxide gas. In the case where a topcoat film formed of a topcoat is formed on the surface of the coating film with white rust formed, the adhesiveness between coating films may decrease. To deal with such a problem, it is necessary to perform removal operation to remove the white rust on the surface of the anticorrosion coating film by suitable means before applying the topcoat, but such a removal operation may not be allowed at all depending on the customer's request or a specific application.

The composition of the present invention preferably contains one or both of molybdenum (metal molybdenum) and a molybdenum compound as zinc oxidation inhibitors (so-called white rust inhibitors), in that white rusting can be reduced.

Examples of the molybdenum compound include molybdenum compounds other than the aluminum zinc phosphomolybdate compounds, e.g., molybdenum oxides such as molybdenum trioxide, molybdenum sulfide, molybdenum halides, molybdenum acid, ammonium molybdate, phosphomolybdic acid, silicomolybdic acid, alkali metal salts of molybdenum acid, alkali metal salts of phosphomolybdic acid, alkali metal salts of silicomolybdic acid, alkaline earth metal salts of molybdenum acid, alkaline earth metal salts of phosphomolybdic acid, alkaline earth metal salts of silicomolybdic acid, the manganese salt of molybdenum acid, the manganese salt of phosphomolybdic acid, the manganese salt of silicomolybdic acid, a basic nitrogen-containing compound salt of molybdenum acid, a basic nitrogen-containing compound salt of phosphomolybdic acid, and a basic nitrogen-containing compound salt of silicomolybdic acid.

One or more of the molybdenum compounds can be used.

In the case of using one or both of molybdenum and a molybdenum compound, the total content of molybdenum and the molybdenum compound is preferably 0.05 to 5.0 parts by mass, more preferably 0.3 to 3.0 parts by mass, further preferably 0.5 to 2.0 parts by mass, with respect to 100 parts by mass of the zinc powder (b). When the content falls within such a range, a sufficient action of preventing zinc oxidation can be obtained, and the activity of the anticorrosion ability of the zinc powder (b) is prevented from decreasing, so that the anticorrosion of the coating film can be maintained.

### <Additives>

The composition of the present invention may contain additives. The additives are materials used for improving or maintaining the performance of the coating or the coating film. Examples of the additives include precipitation inhibitors, drying agents, fluidity modifiers, defoamers, dispersants, color separation inhibitors, anti-skinning agents, plasticizers, and ultraviolet absorbers.

One or more of the additives can be used.

Examples of the precipitation inhibitors include organic bentonite-based, polyethylene oxide-based, fumed silica-based, and amide-based precipitation inhibitors. Examples of commercially available products of the precipitation inhibitors include TIXOGEL MPZ (product name, available from Rockwood Clay Additives GmbH), DISPARLON 4200-20 (product name, available from Kusumoto Chemicals, Ltd.), DISPARLON A630-20X (product name, available from Kusumoto Chemicals, Ltd.), and AEROSIL 200 (product name, available from NIPPON AEROSIL CO., LTD).

One or more of the precipitation inhibitors can be used.

In the case where the composition of the present invention is a two-component composition described later, the content percentage of the precipitation inhibitors is generally 0.5 to 5.0 mass%, preferably 1.0 to 4.0 mass%, in the pigment paste component. The content percentage of the precipitation inhibitors falling within such a range is preferable in view of workability when mixing the pigment paste component and the main agent component since precipitation of the pigment components is reduced.

### <Organic solvent>

The composition of the present invention preferably contains an organic solvent since the dispersibility of the zinc powder (b) is improved, the conformability to the steel plate in the coating step is good, and a coating film having excellent adhesion to the steel plate is obtained.

Examples of the organic solvent include organic solvents generally used in the coating field such as alcohol solvents, ester solvents, ketone solvents, aromatic solvents, and glycol solvents.

Examples of the alcohol solvents include methanol, ethanol, propanol, and butanol. Examples of the ester solvents include ethyl acetate and butyl acetate. Examples of the ketone solvents include methyl isobutyl ketone and cyclohexanone. Examples of the aromatic solvents include benzene, xylene, and toluene. Examples of the glycol solvents include propylene glycol monomethyl ether and propylene glycol monomethyl ether acetate.

One or more of the organic solvents can be used.

In the composition of the present invention, the content percentage of the organic solvents is generally 30 to 90 mass%, preferably 40 to 85 mass%, more preferably 45 to 80 mass%. The composition of the present invention is preferably such an organic solvent-based composition. In the case where the composition of the present invention is a two-component composition described later, it is preferable to adjust the content percentage of the organic solvents in the coating obtained by mixing the main agent component and the pigment paste component to such a range.

### <Preparation of primary anticorrosion coating composition>

The primary anticorrosion coating composition of the present invention is generally used as a two-component composition. That is, the coating composition is generally composed of a main agent component (vehicle) and a pigment paste component. It is preferable to store the main agent component and the pigment paste component in separate containers before use and prepare a primary anticorrosion coating by sufficiently stirring and mixing these components immediately before use.

The main agent component generally contains an organic solvent in addition to the siloxane binder (a). The main agent component may be prepared by mixing the siloxane binder (a) with an organic solvent; or may be prepared by adding hydrochloric acid or the like to a mixed solution of at least one compound selected from alkyl silicates and alkyl trialkoxysilanes or an initial condensate thereof and an organic solvent, and stirring the mixture to generate a partially hydrolyzed condensate. Further, the main agent component may contain a binder other than the siloxane binder (a) .

The pigment paste component generally contains an organic solvent in addition to the zinc powder (b) and the carbon nanomaterial (c). The pigment paste component is prepared, for example, by mixing the zinc powder (b), the carbon nanomaterial (c), an organic solvent, and other components, as required, according to a conventional method. The other components are, for example, at least one selected from pigment components such as anticorrosion pigments other than the zinc powder (b), conductive materials other than the zinc powder (b) and the carbon nanomaterial (c), inorganic powder other than the components (b) and (c), glass powder other than alkali glass, molybdenum, and molybdenum compounds; and additives such as precipitation inhibitors.

The compounding ratio of the main agent component and the pigment paste component can be appropriately set so that the content percentages of the siloxane binder (a), the zinc powder (b), the carbon nanomaterial (c), and the organic solvent after mixing fall within the aforementioned ranges.

### [Substrate with primary anticorrosion coating film and manufacturing method therefor]

The substrate with primary anticorrosion coating film of the present invention has a substrate such as a steel plate and a primary anticorrosion coating film formed of the primary anticorrosion coating composition of the present invention and formed on a surface of the substrate. The average dry film thickness of the primary anticorrosion coating film is generally 30 µm or less, preferably 5 to 25 µm, more preferably 5 to 17 µm, particularly preferably 5 to 10 µm. The average dry film thickness can be measured, for example, by using an electromagnetic film thickness meter.

The composition of the present invention can have good anticorrosion, even in the case where the amount of the zinc powder (b) is reduced, the average dry film thickness of the primary anticorrosion coating film is reduced (e.g., to 5 to 10 µm), and the substrate with primary anticorrosion coating film of the present invention is exposed outdoors for a long period of time such as three months, because of using the carbon nanomaterial (c) together with the zinc powder (b). When the average dry film thickness of the primary anticorrosion coating film is reduced, the processing speed can be increased in the welding/cutting step of the substrate with primary anticorrosion coating film (steel plate), which is advantageous in view of productivity.

The method for manufacturing the substrate with primary anticorrosion coating film of the present invention includes a step of applying the primary anticorrosion coating composition of the present invention onto a surface of the substrate such as a steel plate (coating step), and a step of curing the coating composition applied to form a primary anticorrosion coating film (curing step).

In the coating step, the composition of the present invention (in the case of a two-component composition, a coating obtained by mixing the main agent component and the pigment paste component) is applied onto a surface of the substrate such as a steel plate by a conventionally known method such as air spraying and airless spraying, to form an uncured coating film.

Generally, a line coating machine is mainly used as a coating machine when coatings are applied at shipyards, steelworks, or the like. The line coating machine controls the film thickness according to the coating conditions such as the line speed, the coating pressure of the air spray, the airless spray, or the like installed inside the coating machine, and the spraying tip size (diameter).

The curing temperature (drying temperature) in the curing step is generally 5 to 40°C, preferably 10 to 30°C.

The composition of the present invention is suitably used for pretreating steel plates in a steel plate-processing step in large iron and steel structures such as ships, offshore structures, plants, bridges, and land tanks.

In the present invention, defects such as pits (through holes), blowholes (inner bubbles), gas grooves, and wormholes are less likely to occur in the welding beads, even when the substrate with primary anticorrosion coating film is welded. To sum up, the substrate with primary anticorrosion coating film of the present invention can improve the anticorrosion and the weldability simultaneously.

### [Examples]

Hereinafter, the present invention will be described further specifically based on examples, but the present invention is not limited to these examples. In the following description such as examples, "parts" refer to "parts by mass", unless otherwise specified.

### [Preparation Example 1] Preparation of alkyl silicate condensate

After 31.5 g of Ethyl silicate 40 (available from COLCOAT CO., LTD., 40 mass% in terms of SiO₂), 10.4 g of industrial ethanol, 5 g of deionized water, and 0.1 g of 35 mass% hydrochloric acid were put into a container and stirred at 50°C for 4 hours and 40 minutes, 53 g of isopropyl alcohol was added thereto, to prepare a solution containing an alkyl silicate condensate 1 (12.6 mass% in terms of SiO₂). The weight-average molecular weight (Mw) of the condensate 1, as measured by gel permeation chromatography (GPC), was 2,500.

The conditions for GPC measurement were as follows. A small amount of a condensate sample was taken, and tetrahydrofuran was added thereto for dilution. The solution was filtered with a membrane filter, to obtain a GPC measurement sample.
- Apparatus: 2695 separation module (Aliance GPC multi system), available from Nihon Waters K.K.
- Columns: TSKgel Super H4000 and TSKgel Super H2000, available from Tosoh Corporation
- Eluent: Tetrahydrofuran (THF)
- Flow rate: 0.6 ml/min
- Detector: Shodex RI-104
- Temperature of column constant-temperature bath: 40°C
- Standard substance: Polystyrene

### [Preparation Example 2-1] Preparation of pigment paste component

1.0 part of TIXOGEL MPZ (product name, Rockwood Clay Additives GmbH) as a precipitation inhibitor, 18.3 parts of Ceramic powder OF-T (product name, potassium feldspar, available from KINSEI MATEC CO., LTD.) as inorganic powder other than the components (b) and (c), 0.7 parts of Super SS (product name, available from Maruo Calcium Co., Ltd.), 1.0 part of Zinc oxide Type 3 (product name, available from HAKUSUI TECH CO., LTD.) as a conductive material other than the components (b) and (c), 6.1 parts of xylene as an organic solvent, 5.7 parts of butyl acetate, and 8.4 parts of isobutyl alcohol were put into a polyethylene container, and glass beads were added thereto, followed by shaking the mixture in a paint shaker for 3 hours. Then, 3.4 parts of STANDART Zinc Flake GTT (product name, available from ECKART GmbH) as the zinc powder (b) and 17.0 parts of F-2000 (product name, available from THE HONJO CHEMICAL CORPORATION) were added thereto, followed by further shaking for 5 minutes, to disperse the pigment components. Thereafter, the glass beads were removed using an 80-mesh screen to prepare a pigment paste component.

### [Preparation Examples 2-2 to 2-19] Preparation of pigment paste component

A pigment paste component was prepared in the same manner as in Preparation Example 2-1 except that the compounding composition was changed as shown in Table 1. The carbon nanomaterial (c) was added when the organic solvent was added.

The details of the zinc powder (b), the anticorrosion pigment other than the zinc powder (b), the carbon nanomaterial (c) and a carbon material (earthy graphite) for Comparative Examples in Table 1 are as follows.
- STANDART Zinc Flake GTT: Flaky zinc powder, median diameter (D50) = 8.5 µm, average thickness = 0.4 µm, aspect ratio ((median diameter/average thickness) = 21), available from ECKART GmbH
- F-2000: Spherical zinc powder, median diameter (D50) = 5 µm, available from THE HONJO CHEMICAL CORPORATION
- LF BOSEI PM-303W: Aluminum zinc phosphomolybdate inorganic compound, available from KIKUCHI COLOR & CHEMICALS CORPORATION
- Genable 1031: Xylene/resin dispersion of graphene, graphene solid content 10 mass%, median diameter (D50) = 1 to 3 µm, available from Applied Graphene Materials plc
- Genable 1231: Xylene/resin dispersion of graphene, graphene solid content 1 mass%, median diameter (D50) = 5 to 6 µm, available from Applied Graphene Materials plc
- Graphene Dispersion in NMP: graphene 4 mass% (N-methyl-2-pyrrolidone 94.9 mass%), particle size 0.5 to 5 µm (length direction), available from ACS Material
- Carbon Nanotube Single-walled (> 85%) below 3 nm (Average diam.), over 5 µm (Average length): Single-walled carbon nanotube, average diameter 3 nm or less, average fiber length 5 µm or more, available from Tokyo Chemical Industry Co., Ltd.
- Fullerene C60: C₆₀ fullerene, purity 99.0 % or more, available from Tokyo Chemical Industry Co., Ltd.
- Earthy graphite: Graphite, available from Nishimura Graphite Co., Ltd.

### [Examples 1 to 17 and Comparative Examples 1 and 2]

A solution containing the alkyl silicate condensate 1 obtained in Preparation Example 1 and a pigment paste component prepared with the compounding ratio shown in Table 1 were mixed at a ratio (by mass) shown in Table 1 with the percentage of each component, to prepare a primary anticorrosion coating.

### [Evaluation method/evaluation criteria]

The line conditions (line speed: 10 m/min and coating pressure: 0.2 MPa) of the line coating machine (device name: SP conveyor coating machine, available from TAKEUCHI MFG. CO., LTD.) were adjusted so that the average dry film thickness of the coating film was 8 µm. Under such line conditions, a test plate was produced and evaluated as follows, using the primary anticorrosion coating obtained in each of Examples and Comparative Examples.

### <Anticorrosion of primary anticorrosion coating film (rusting/white rusting)>

The primary anticorrosion coating was applied to a blasted surface of a sandblast treated plate (JIS G3101, SS400, dimension: 150 mm × 70 mm × 2.3 mm) using a line coating machine. Then, it was dried in a constant temperature room at a temperature of 23°C and a relative humidity of 50% for one week, according to the standard of JIS K5600 1-6, to produce a test plate consisting of the primary anticorrosion coating film with an average dry film thickness of 8 µm and the treated plate. The average dry film thickness was measured using an electromagnetic film thickness meter "LE-370" (product name, available from Kett Electric Laboratory).

The test plate was set on an outdoor exposure table (on the premises of CHUGOKU MARINE PAINTS, LTD., Otake Research Institute) and left for a certain period of time. Here, the test plate was fixed in the state where the coated surface of the test plate faced the south side, and the test plate was tilted at 45 degrees to the horizontal.

The area percentages (%) of the rusted test plate surface and the whiterusted test plate surface in the entire surface of the test plate after standing for one month and three months were measured, to evaluate the conditions of rusting and white rusting. The evaluation criteria were as follows.

### <Evaluation criteria for rusting condition (ASTM D610)>

10: No rusting recognized or a percentage of rusted area of 0.01 % or less
9: Very slight rusting or a percentage of rusted area of over 0.01% and 0.03 % or less
8: Slight rusting or a percentage of rusted area of over 0.03% and 0.1 % or less
7: A percentage of rusted area of over 0.1% and 0.3 % or less
6: Clear rusted spots or a percentage of rusted area of over 0.3% and 1 % or less
5: A percentage of rusted area of over 1% and 3 % or less
4: A percentage of rusted area of over 3% and 10 % or less
3: A percentage of rusted area of over 10% and 1/6 (16%) or less
2: A percentage of rusted area of over 1/6 (16%) and 1/3 (33%) or less
1: A percentage of rusted area of over 1/3 (33%) and 1/2 (50%) or less
0: A percentage of rusted area of over almost 1/2 (50%) and up to 100%

### <Evaluation criteria for whiterusted condition>

10: No white rusting recognized or a percentage of whiterusted area of 0.01 % or less
9: Very slight white rusting or a percentage of whiterusted area of over 0.01% and 0.03 % or less
8: Slight white rusting or a percentage of whiterusted area of over 0.03% and 0.1 % or less
7: A percentage of whiterusted area of over 0.1% and 0.3 % or less
6: Clear whiterusted spots or a percentage of whiterusted area of over 0.3% and 1 % or less
5: A percentage of whiterusted area of over 1% and 3 % or less
4: A percentage of whiterusted area of over 3% and 10 % or less
3: A percentage of whiterusted area of over 10% and 1/6 (16%) or less
2: A percentage of whiterusted area of over 1/6 (16%) and 1/3 (33%) or less
1: A percentage of whiterusted area of over 1/3 (33%) and 1/2 (50%) or less
0: A percentage of whiterusted area of over almost 1/2 (50%) and up to 100%

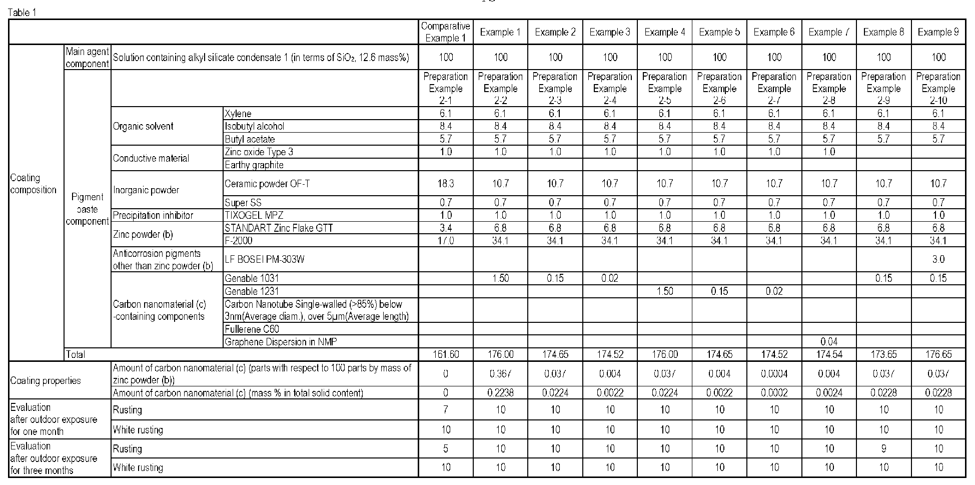

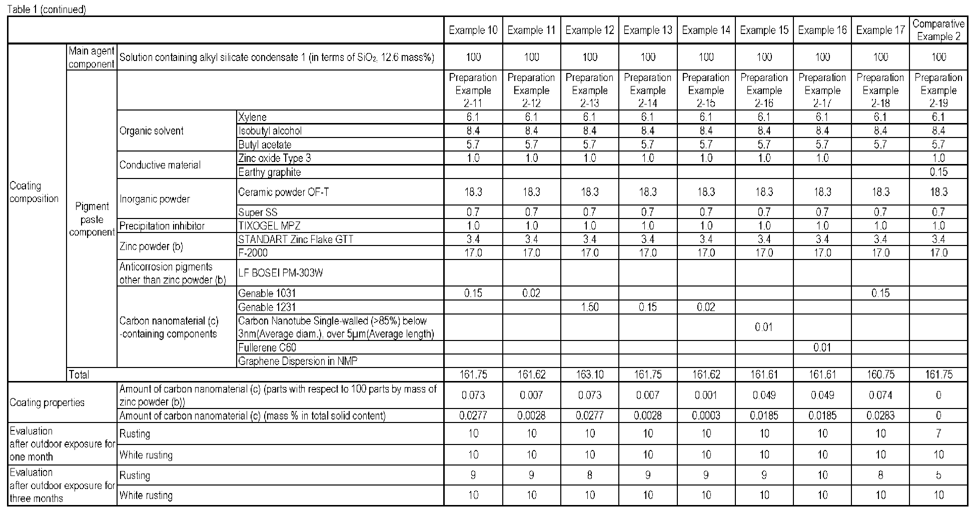

## Claims

1. A primary anticorrosion coating composition comprising:
a siloxane binder (a) which is a condensate of at least one compound selected from alkyl silicates and alkyl trialkoxysilanes;
zinc powder (b); and
a carbon nanomaterial (c) which is at least one selected from graphenes, fullerenes, and carbon nanotubes.

2. The primary anticorrosion coating composition according to claim 1, wherein
the zinc powder (b) is at least one selected from flaky zinc powder and spherical zinc powder.

3. The primary anticorrosion coating composition according to claim 1 or 2, wherein
a content of the carbon nanomaterial (c) is 0.0001 to 0.7 parts by mass with respect to 100 parts by mass of the zinc powder (b).

4. The primary anticorrosion coating composition according to any one of claims 1 to 3, wherein
the carbon nanomaterial (c) comprises a graphene.

5. A substrate with primary anticorrosion coating film, comprising:
a substrate; and
a primary anticorrosion coating film formed of the primary anticorrosion coating composition according to any one of claims 1 to 4 and formed on a surface of the substrate.

6. A method for manufacturing a substrate with primary anticorrosion coating film, comprising:
a step of applying the primary anticorrosion coating composition according to any one of claims 1 to 4 onto a surface of the substrate; and
a step of curing the primary anticorrosion coating composition applied to form a primary anticorrosion coating film.
